# EUROPÄISCHE PATENTSCHRIFT

(11) **EP 1 325 786 B1**
(45) Veröffentlichungstag und Bekanntmachung des Hinweises auf die Patenterteilung: **20.07.2005**
(21) Anmeldenummer: 02012863.3
(22) Anmeldetag: 11.06.2002
(51) Int. Cl.: B23B 31/10, B23B 31/20

(54) **Mechanisch betätigtes Spannfutter für eine rotierende Maschinenspindel**
Mechanically driven chuck for a rotary spindle
Mandrin actionné mécaniquement pour une broche tournante

(30) Priorität: 21.12.2001 DE 20120828 U
(43) Veröffentlichungstag der Anmeldung: 09.07.2003
(73) Patentinhaber: BÜMACH ENGINEERING INTERNATIONAL B.V., 7825 VS Emmen (NL)
(72) Erfinder: Büter, Josef, 49733 Haren/Altenberge (DE)
(74) Vertreter: Haussingen, Peter

(56) Entgegenhaltungen:
- WO-A-01/34332
- DE-A- 3 629 722
- FR-A- 1 250 002

## Beschreibung

Die Erfindung bezeichnet ein Spannfutter, insbesondere für Stangendrehautomaten, bei denen das zu bearbeitende Material durch die Spindel geführt wird.

Aus dem allgemeinen Stand der Technik sind die unterschiedlichsten Spannfutter für die Aufnahme rotationssymmetrischer Werkstücke bekannt, die beispielsweise für das Drehen als manuell bediente Drei- oder Vierbackenfutter für die Innen- oder auch Außenspannung des Werkstücks ausgeführt sind. Diese Spannfutter können nach Spannfutter mit Spiralring und solche, die nach dem Keilhakenprinzip arbeiten, unterschieden werden. Das Öffnen oder Verspannen der Futter erfolgt mittels eines Spannschlüssels durch Verdrehen eines im Spannfutter angeordneten, auf die Spannbacken wirkenden Spiralrings bzw. durch Drehen eines Spannkolbens, der unmittelbar auf die Spannbacke wirkt.

Drehautomaten für die Massenfertigung von Teilen aus Stangenmaterial sind vorwiegend mit Spannfuttern oder auch Spannzangen ausgerüstet, die als Drehdurchführung ausgebildet sind, wobei das Spannen oder Öffnen mit Hilfe eines mitrotierenden Spannzylinders erfolgt, der konzentrisch in der Futterachse angeordnet ist. Die Betätigung dieses Spannzylinders kann während des Betriebs hydraulisch oder pneumatisch über ein zentrisch angeordnetes Zugrohr erfolgen. Hierbei sind auch mit Wegkontrolleinheiten und Drehmeldern ausgerüstete Kraftspanneinrichtungen im Einsatz, um über eine zugeordnete Steuerung den Öffnungsgrad des Spannfutters als auch die Vorschublänge des zu bearbeitenden Stangenmaterials zu kontrollieren.

Für das Spannen, insbesondere von Werkzeugen werden auch so genannte Hydrospannfutter eingesetzt, die bei höchsten Drehzahlen geringste Unwuchten aufweisen. Das Prinzip der Hydrospannfutter beruht auf der Eigenschaft elastischer Werkstoffe, sich bei Druckbeaufschlagung zu verformen und die in Folge dieser Verformung entstehende radiale Änderung für das Verspannen eines Werkzeugs oder eines Werkstücks zu nutzen, wobei ein auf diesem Prinzip basierendes Dehnspannfutter eine um die Dehnbüchse angeordnete Druckkammer aufweist, die mit einem druckstabilen Fluid gefüllt ist. So kann mittels einer Spannschraube, die auf einen Kolben wirkt, dessen Druck sich über den Kolbenraum und einen Zulauf zur Druckkammer fortsetzt, die Verformung zum Zwecke des Verspannens erzeugt werden. Die Dehnbüchse verformt sich gleichmäßig, zylindrisch und zentrisch zur Mittelachse, um auf diese Weise ein sicheres Verspannen zu gewährleisten.
Spannsysteme dieser Art zeichnen sich durch hervorragende Rundlaufgenauigkeiten aus, weisen aber nur geringe radiale Verstellwege auf, wodurch nur geringe Durchmesserunterschiede bei einer Spannweite zustellbar sind, für unterschiedliche Durchmesser sind jeweils spezielle, zugehörige Dehnbüchsen erforderlich, die einen Wechsel des Spannfutters bedingen.
Kraftspannsysteme, die für automatisierte Drehmaschinen im Einsatz sind, bedingen einen erheblichen Raumbedarf längs der hydraulischen Hohlspannung, so dass mit Stangenautomaten ausgerüstet Drehmaschinen große räumliche Abmessungen aufweisen.
Des Weiteren sind Spannzangen in vielfältiger Ausführungsform und unterschiedlichster Gestaltung im Einsatz. Grundsätzlich wird auch hier der Spanneffekt mittels eines Spannkonus erzielt. Spannzangen erlauben auch nur einen geringen radialen Hub und sind aus diesem Grund relativ genau auf den Durchmesser des zu bearbeitenden Materials bzw. den Schaftdurchmesser eines Werkzeugs abzustimmen.
Als günstige Alternative hierzu werden Spannfutter mit Spannköpfen aus festen, mit zwischengelagerten elastischen, Segmenten eingesetzt, die größere radiale Verstellwege erlauben und somit einen größeren Spannbereich ermöglichen. Die Spannkräfte werden durch axiale Verschiebung des konischen Spannkopfs im Innenkonus des Spannfutters in der Spannachse mittels der radialen Keilwirkung erzielt. Dazu wird ein Spannkopf hoher Eigensteifigkeit konzentrisch in das Innere eines Spannfutters auswechselbar derart eingebracht, dass der aus festen und elastischen Segmenten bestehende konische Spannkopf konzentrisch zu einer komplementären konischen Innenmantelfläche gelagert wird und durch die Wirkung einer axialen Zugkraft, die hydraulisch, pneumatisch oder auch mechanisch sein kann, auf den Spannkopf eine radiale Verstellung der Segmente bewirkt, die das Spannen ermöglicht. Die festen Segmente sind mit zwischen diesen angeordneten elastischen Segmenten zusammenvulkanisiert, so dass diese als ein in sich geschlossener Körper austauschbar sind. Zur Einbringung der Spannkraft kann in verschiedenster Weise erfolgen, z.B. Spannen hydraulisch, Lösen hydraulisch oder mechanisch über Federn.
Bei diesen, mit hydraulischer oder pneumatischer Hilfsenergie betätigten Spannsystemen können durch Leckagen Druckverluste auftreten, die die sichere Spannung der Werkstücke zur Erzielung einer hohen Bearbeitungsqualität gefährden und die mit zusätzlichen, aufwändigen Druckausgleichssystemen kompensiert werden müssen.
Bei Maschinenverkettungen werden unter anderem Spannfutter in Form von Spannstöcken eingesetzt, die unabhängig voneinander bedient werden. Die Spannkraft kann hierbei mittels Tellerfedern erzeugt werden und das Lösen über einen von Außen drehbaren Zapfen erfolgen, in dessen Drehachse ein Schrauber axial verschiebbar formschlüssig mit dem Zapfen gekoppelt wird. Die Spannstöcke sind ebenso wie die Spannfutter mit wechselbaren elastischen Spannköpfen, die beispielsweise in der Druckschrift DE 36 29 722 Al beschrieben sind, ausgerüstet. Beim Spannen von Werkstücken unterschiedlicher Durchmesser entstehen unterschiedliche Spannkräfte, da die Federrate in unterschiedlichen Packungslagen der Federn wirkt. Beim Öffnen des elastischen Spannkopfs erfolgt die Rückführung der Spannbacken, wenn das Öffnungsmoment nicht gehalten wird, durch die elastischen Tellerfedern autark, so dass der eingestellte Öffnungsgrad sich immer bis zum Kleinstwert schließt.

In der Druckschrift WO 01/34332 A1 wird ein Zangenspannfutter zur Betätigung einer Zange beschrieben, wobei die Zange mit ihrem rückwärtigen Gewindeteil von einem Zangenhalter im Spannfutterkörper, gegen axiale Verschiebung gesichert, aufgenommen wird. Eine Zangenschließbuchse ist innerhalb einer Bohrung des Spannfutterkörpers gleitfähig und in Bezug auf die Zange axial verschieblich angeordnet. Eine vordere konische Innenfläche der Zangenschließbuchse steht in üblicher Weise mit dem vorderen Konus der Zange zum Spannen in Wirkverbindung. Die Zangenschließbuchse selbst wird über eine Gewindepaarung mittels eines im Spannfutterkörper drehbar gelagerten Tellerrads mit Zähnen und einem von Außen antreibbaren Ritzel axial verschoben. Der Aufbau des beschriebenen Spannfutters ist kompliziert und aufwändig. Des Weiteren entsteht erheblicher Verschleiß an der Zangenschließbuchse sowie in der Bohrung als Führung im Spannfutterkörper, wodurch auf Dauer keine genaue Zentrierung des gespannten Werkstücks und keine reproduzierbare Spannkraft mehr gewährleistet sind.

Die Aufgabe der Erfindung besteht in der Entwicklung eines Spannfutters, dessen Spannkraft werkstück- und werkstoffabhängig für beliebige Durchmesser einstellbar ist, das die Segmentspannkopf mit elastischen Zwischenlagen, in Wirkverbindung steht.
Das Tellerrad als Teil des Kegeltrieb wird über ein im Außengehäuse des Spannfutter gelagertes Ritzel, das von Außen über eine geeignete Ausbildung dessen Achse für die Betätigung zugänglich ist, durch daran angesetzte maschinelle oder von Hand bediente Schrauber in Rotation versetzt, um in Abhängigkeit von der Drehrichtung über das Schiebeglied die Spannung oder Lockerung des Werkstücks im Spannkopf zu bewirken.
Günstigerweise ist der Schrauber zur Drehung des Ritzels in Drehautomaten mit gesteuerter Zuordnung der Werkzeuge als Ausrüstungskomponente integriert und in die programmierte Steuerung einbezogen. Die Ansteuerung der Winkelposition des Spannfutters als Lagezuordnung der Drehachse des Ritzels zu der des Schraubers kann in üblicher Weise, beispielsweise über Winkelgeber oder digitale Encoder, erfolgen. In Abhängigkeit von der Größe der erforderlichen Spannkräfte können hydraulisch, pneumatisch oder auch elektromotorisch angetriebene Schrauber in Anwendung gebracht werden.
Durch die Wahl des Übersetzungsverhältnisses des Kegeltriebs aus Ritzel und Tellerrad, der Steigung des Gewindes der Gewindepaarung zwischen dem Innengewinde des Tellerrads und dem Außengewinde des Schiebeglieds sowie der Größe des eingeleiteten Drehmoments kann die erforderliche Spannkraft für jedes Werkstück eingestellt und erzielt werden.
Die genannten Kriterien und Größen sind vorteilhaft in weiten Grenzen variierbar, so dass eine exakt auf das jeweilige Werkstück, zum Beispiel dessen Masse und Werkstoff, abgestimmte Spannkraftzuordnung reproduzierbar realisiert werden kann.
Ebenso verbleibt der Spannkopf in der jeweiligen Öffnungsstellung, die durch die Position des Schiebeglieds bestimmt ist.

Das Spannfutter ist sowohl für numerisch gesteuerte Stangendrehautomaten in Form von Ein- oder Mehrspindelautomaten, die mit automatisierten Handhabungsgeräten für die Werkstückzu- und -abführung ausgerüstet sind, wobei das zu bearbeitende Material durch die Spindel zugeführt wird, als auch für manuell bediente Einzelmaschinen einsetzbar.

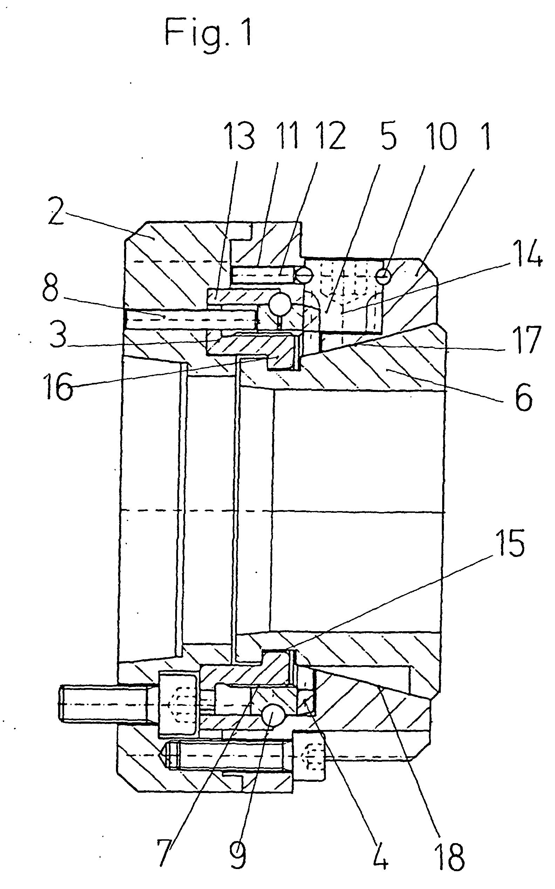

Die Erfindung wird als Ausführungsbeispiel an Hand von Fig. 1 als Schnitt durch das Spannfutter näher erläutert.

Nach Fig. 1 ist das Außengehäuse des Spannfutters aus einem ersten Gehäuseteil 1 und einem zweiten Gehäuseteil 2 gebildet, in dem ein Schiebeglied in Form einer Stellbüchse 3, ein Tellerrad 4, ein Ritzel 5 und ein Segmentspannkopf 6 angeordnet sind. Das Tellerrad 4 und das Ritzel 5 bilden ein Kegelradgetriebe, das über eine Gewindepaarung 7, gebildet aus einem Innengewinde im Tellerrad 4 und einem Außengewinde an der Stellbüchse 3, mit der Stellbüchse 3 formschlüssig gekoppelt ist, wodurch bei Rotation des im ersten Gehäuseteil 1 gelagerten Ritzels 5 die Stellbüchse 3 axial verschoben wird. Die Stellbüchse 3 wird durch, mit dem zweiten Gehäuseteil 2 fest verbundene, Führungsstifte 8 geführt und gegen Drehbewegungen gesichert, wobei jedoch die gleitende Bewegung der Stellbüchse 3 innerhalb des axialen Freiraums ermöglicht wird. Das Tellerrad 4 des Kegeltriebs wird mit Kugeln 9 und das Ritzel 5 mit weiteren Kugeln 10 im ersten Gehäuseteil 1 gelagert. Die Lagerung der weiteren Kugeln 10 erfolgt im ersten Gehäuseteil 1 und dem Ritzel 5. Für die Montage ist eine Bohrung 11, die mit einem Bolzen 12 wieder verschlossen wird, eingebracht. Die Kugeln 9 sind im ersten Gehäuseteil 1, einem Außenringteil 13 und dem Tellerrad 4 gelagert. An das Ritzel 5 kann in dessen Drehachse 14 ein Schrauber formschlüssig angekoppelt werden, wodurch die rotierende Bewegung des Tellerrads 4 erfolgt, die über die Gewindepaarung 7 eine axiale Verschiebung, der Stellbüchse 3 bewirkt. Die Richtung der axialen Verschiebung der Stellbüchse 3 hängt von der Drehrichtung des Ritzels 5 ab. Der Segmentspannkopf 6 ist über eine umlaufende Nut 15 und einem Kragen 16 an der Stellbüchse 3 formschlüssig mit dieser verbunden, wodurch der Segmentspannkopf 6 mit seinem Außenkonus 17, der komplementär zu einem Innengehäusekonus 18 im ersten Gehäuseteil 1 ist, mit der Stellbüchse 3 axial verschoben wird und eine Änderung der Öffnungsweite des Segmentspannkopfs 6 erfolgt. Als Segmentspannkopf 6 wird ein in bekannter Weise aus hochfesten Stahlspannbackensegmenten und elastischen Segmenten zusammenvulkanisierter Spannkopf verwendet.

### Verwendete Bezugszeichen

- 1: erstes Gehäuseteil
- 2: zweites Gehäuseteil
- 3: Stellbüchse
- 4: Tellerrad
- 5: Ritzel
- 6: Segmentspannkopf
- 7: Gewindepaarung.
- 8: Führungsstifte
- 9: Kugeln
- 10: weitere Kugeln
- 11: Bohrung
- 12: Bolzen
- 13: Außenringteil
- 14: Drehachse
- 15: umlaufende Nut
- 16: Kragen
- 17: Außenkonus
- 18: Innengehäusekonus

## Patentansprüche

1. Mechanisch betätigtes Spannfutter, bei dem das zu bearbeitende Material durch die Spindel geführt wird, dessen Außengehäuse aus einem ersten und einem zweiten Gehäuseteil (1; 2) gebildet wird, in dem ein aus hochfesten Spannbakkensegmenten und elastischen Segmenten zusammenvulkanisierter konischer Segmentspannkopf (6) in einem komplementären Innengehäusekonus (18) des ersten Gehäuseteils (1) angeordnet ist und die Spannwirkung im Ergebnis des axialen Verschiebens des Segmentspannkopfs (6) vorliegt, wobei im Außengehäuse des Spannfutters ein Schiebeglied in Form einer Stellbüchse (3), ein Tellerrad (4), ein Ritzel (5) und ein Segmentspannkopf (6) angeordnet sind und wobei das Tellerrad (4) und das Ritzel (5) ein Kegelradgetriebe bilden, das über eine Gewindepaarung (7), bestehend aus einem Innengewinde im Tellerrad (4) und einem Außengewinde an der Stellbüchse (3), mit der Stellbüchse (3) formschlüssig gekoppelt ist, **dadurch gekennzeichnet,**
**dass** die Stellbüchse (3) zylindrisch ausgebildet ist und an ihrem Innendurchmesser einen Kragen (16) aufweist, mit dem diese mit einer umlaufenden Nut (15) am Umfang des Segmentspannkopf (6) gekoppelt ist.

2. Spannfutter nach Anspruch 1, **dadurch gekennzeichnet,**
**dass** an eine Drehachse (14) des Ritzels (5) von Außen maschinelle oder von Hand bediente Schrauber axial verschiebbar formschlüssig koppelbar sind.

3. Spannfutter nach den Ansprüchen 1 und 2, **dadurch gekennzeichnet,**
**dass** der Schrauber zur Drehung des Ritzels (5) in Drehautomaten mit gesteuerter Zuordnung der Werkzeuge als Ausrüstungskomponente integriert und in die programmierte Steuerung einbezogen ist.

## Claims

1. Mechanically actuated clamping chuck, wherein the material to be machined is guided by the spindle, the outer housing of said clamping chuck being formed from a first and a second housing part (1; 2), in which a conical segment clamping head (6) which is vulcanised together from high-strength clamping jaw segments and elastic segments is disposed in a complementary inner housing cone (18) of the first housing part (1) and the clamping effect is provided as a result of the axial displacement of the segment clamping head (6), wherein the outer housing of the clamping chuck is provided with a push member in the form of an adjusting liner (3), a disk wheel (4), a pinion (5) and a segment clamping head (6) and wherein the disk wheel (4) and the pinion (5) form a mitre gear which is coupled in a positive-locking manner to the adjusting liner (3) by way of a threaded pairing (7), consisting of an internal thread in the disk wheel (4) and of an external thread on the adjusting liner (3), **characterised in that**
the adjusting liner (3) is cylindrical in formation and comprises on its inner diameter a collar (16), by means of which the adjusting liner is coupled to a circumferential groove (15) on the periphery of the segment clamping head (6).

2. Clamping chuck as claimed in claim 1, **characterised in that** screws which are operated externally by machine or by hand can be coupled in an axially displaceable, positive-locking manner to an axis of rotation (14) of the pinion (5).

3. Clamping chuck as claimed in claims 1 and 2, **characterised in that** the screw for rotating the pinion (5) is integrated as part of the equipment in automatic lathes with a controlled allocation of the tools and is incorporated into the programmed controller.

## Revendications

1. Mandrin de serrage actionné mécaniquement dans lequel le matériau à usiner passe à travers la broche, dont le boîtier externe constitué d'une première et d'une seconde partie (1,2) contient une tête de serrage conique (6) composée par vulcanisation de segments de mâchoire de serrage très solides avec des segments élastiques, cette tête étant logée dans un cône complémentaire (18) de la première partie de boîtier (1) et le serrage étant produit par coulissement axial de la tête de serrage (6), dans lequel, dans le boîtier externe du mandrin de serrage sont montés un organe coulissant ayant la forme d'une douille de réglage (3), une couronne dentée (4), un pignon (5) et la tête de serrage à segments (6), la couronne (4) et le pignon (5) formant un engrenage conique qui, par un accouplement fileté (7) constitué d'un filetage interne porté par la couronne (4) et d'un filetage externe porté par la douille de réglage (3), est relié par combinaison de formes à la douille de réglage (3),
**caractérisé en ce que**
la douille de réglage (3) est cylindrique et présente sur son diamètre interne une collerette (16) qui l'accouple à une rainure périphérique (15) faisant le tour de la tête de serrage (6).

2. Mandrin de serrage selon la revendication 1,
**caractérisé en ce que**
sur un axe de rotation (14) du pignon (5) et coulissant sur cet axe on peut accoupler avec combinaison de formes des écrous actionnés à la main ou à la machine.

3. Mandrin de serrage selon l'une quelconque des revendications 1 ou 2,
**caractérisé en ce que**
l'écrou faisant tourner le pignon (5) est intégré en tant que composant de l'équipement à des tours automatiques à outils gérés par une commande, et il est pris en compte dans cette commande programmée.
